# EUROPÄISCHE PATENTSCHRIFT

(11) **EP 3 279 827 B1**
(45) Veröffentlichungstag und Bekanntmachung des Hinweises auf die Patenterteilung: **24.06.2020**
(21) Anmeldenummer: 17181429.6
(22) Anmeldetag: 14.07.2017
(51) Int. Cl.: G06K 7/00

(54) **CHIPKARTENLESEGERÄT**
CHIP CARD READING DEVICE
APPAREIL DE LECTURE DE CARTE À PUCE

(30) Priorität: 01.08.2016 DE 102016214180
(43) Veröffentlichungstag der Anmeldung: 07.02.2018
(73) Patentinhaber: Continental Automotive GmbH, 30165 Hannover (DE)
(72) Erfinder: Macovei, Paul Adrian, 300350 Timisoara (RO); Götz, Jürgen, 78087 Mönchweiler (DE); Hug, Klaus, 78727 Oberndorf (DE)

(56) Entgegenhaltungen:
- EP-A2- 1 623 364
- DE-A1- 3 916 783
- DE-A1- 10 339 931
- US-A1- 2016 111 802

## Beschreibung

Die vorliegende Erfindung betrifft eine Einfahrvorrichtung für ein Chipkartenlesegerät sowie ein Gerät, welches eine entsprechende Einfahrvorrichtung aufweist.

Aus der DE 103 39 931 A1 ist ein Chipkartenlesegerät mit abgedichteter Schublade bekannt. Aufgrund der Abdichtung bleibt die Chipkarte vor Wasser und anderen Fremdstoffen geschützt und ist im geschlossenen Zustand gegen die Umgebung abgeschottet.

Ein Kartenhalteelement offenbart US 2016/0111802 A1. An einem Kartenfach ist ein elastisches Element zur Abdichtung befestigt.

Ferner ist aus DE 39 16 783 A1 eine Vorrichtung zum Lesen und/oder Beschreiben von Chipkarten bekannt. In einer Nut eines Kolbens einer Dämpfungsvorrichtung einer Schublade sitzt ein Dichtungsring.

Weiterhin offenbart EP 1 623 364 A2 eine Kartenaufnahmevorrichtung mit einer Entwässerungskammer und einer Entwässerung.

Aufgabe der vorliegenden Erfindung ist es, eine Einfahrvorrichtung für ein verbessertes Chipkartenlesegerät vorzuschlagen.

Erfindungsgemäß ist dazu eine Einfahrvorrichtung mit den Merkmalen des Anspruchs 1 vorgesehen.

Das Chipkartenlesegerät weist ein Gehäuse auf, in dem ein eine Chipkarte aufnehmendes Schubelement zwischen einem eingefahrenen und einem ausgefahrenen Zustand vor- und zurückbeweglich angeordnet ist. Dabei ist die Chipkarte im eingefahrenen Zustand des Schubelements nicht entnehmbar. Das Schubelement ist im eingefahrenen Zustand mittels eines Dichtelements gegenüber dem Gehäuse abgedichtet. Das Dichtelement weist an zumindest einer Seite einen vom Gehäuse beabstandeten Bereich auf. Es ist also nicht komplett umlaufend abdichtend. Dies hat den Vorteil, einen Luftaustausch zwischen dem die Chipkarte umgebenden Bereich und der Umgebung zu ermöglichen und somit eine Überhitzung im Bereich der Chipkarte zu vermeiden.

Es ist vorgesehen, dass sich der vom Gehäuse beabstandete Bereich in Einbaulage unten befindet. Eine Dichtlippe des Dichtelements liegt somit nur nach oben und seitlich komplett am Gehäuse an, während unten ein mehr oder weniger breiter Durchlass verbleibt. Dies ermöglicht den Abfluss von Spritz- oder Kondenswasser nach unten, welches sich vor dem Dichtelement im der Chipkarte abgewandten Bereich ansammeln kann, sodass es die Chipkarte nicht erreicht.

Vorteilhafterweise ist das Dichtelement an einem Klappelement angeordnet. Der vor dem Dichtelement liegende Bereich wird durch Wegklappen des Klappelements im ausgefahrenen Zustand des Schubelements aus dem Bereich der Chipkarte entfernt. Eventuell dort noch befindliches Wasser oder Fremdstoffe sind dann weiter von der Chipkarte entfernt und können diese nicht oder nur unwesentlich beeinträchtigen.

Erfindungsgemäß ist das Schubelement im Bereich des Klappelements durch einen Balken gebildet, dessen Breite nur einen Bruchteil der Breite der Chipkarte beträgt. Sinnvollerweise können hier auch zwei oder mehrere entsprechende Balken vorgesehen sein. Der oder die Balken stützen die Chipkarte ausreichend ab und ermöglichen es gleichzeitig, die Chipkarte zur Entnahme bzw. zum Einsetzen zu greifen.

Gemäß einer vorteilhaften Ausgestaltung wird das Klappelement im ausgefahrenen Zustand des Schubelements in seiner Position gehalten, vorzugsweise durch Rastelemente. Die durch die Halterung definierte Stellung des Klappelements entspricht nach dem Ausfahren der selben wie im eingefahrenen Zustand und schützt die Chipkarte gegen ungewollte Entnahme. Erst wenn das Klappelement aktiv aus der gehaltenen Position herausbewegt wird, kann die Chipkarte entnommen und auch wieder eingesetzt werden.

Das Schubelement weist vorteilhafterweise im Bereich des Dichtelements einer Haltekante auf, deren Ausdehnung in Richtung der Dicke der Chipkarte geringer ist, als die entsprechende Ausdehnung des Dichtelements. Dies erleichtert die Entnahme der Chipkarte, da sie nur geringfügig anzuheben ist um über die Haltekante hinweg herausgenommen werden zu können. Dabei tritt auch eine geringfügigere Verbiegung der Chipkarte auf als aus dem Stand der Technik bekannt. Eine längere Haltbarkeit aufgrund geringerer mechanischer Belastung der Chipkarte wird damit erzielt. Entsprechendes gilt für das Einsetzen der Chipkarte. Gleichzeitig wird das Dichtelement beim Einsetzen und Entnehmen der Karte geschont. Die Haltekante ist andererseits aber auch so hoch, dass die Chipkarte in der eingefahrenen Position des Schubelements weder entnehmbar noch einsetzbar ist, selbst wenn das Klappelement fehlerhafterweise entfernt oder nicht montiert sein sollte.

Erfindungsgemäß ist das Dichtelement hinter einer Frontfläche des Klappelements flächig hinterspritzt. Dies hat den Vorteil einer guten Halterung am Klappelement durch die formschlüssige Verbindung zwischen Dichtelement und Frontfläche.

Die erfindungsgemäße Einfahrvorrichtung für ein Chipkartenlesegerät weist die genannten Vorteile des Chipkartenlesegeräts auf. Es kann auch ohne Gehäuse vertrieben werden und zeigt einige der erfindungsgemäßen Vorteile erst im Zusammenspiel mit dem entsprechenden Gehäuse.

Ein Gerät mit einem genannten Chipkartenlesegerät weist entsprechende Vorteile auf. Hierbei handelt es sich vorzugsweise um einen Tachographen oder ein anderes Gerät, bei dem Manipulationssicherheit von großer Wichtigkeit ist. Die erfindungsgemäße Lösung stellt sicher, dass die Chipkarte im eingefahrenen Zustand des Schubelements nicht entnehm- oder einsetzbar ist. Auch ein nach eventuellem Entfernen des Klappelements vorgenommener Versuch, die Chipkarte zu entnehmen, wird daran scheitern, dass die Balken eine Haltekante aufweisen. Ein Entfernen oder Einsetzen einer Chipkarte im eingefahrenen Zustand des Schubelements ist dann nur bei aktiver Entfernung der Haltekante möglich, welcher nachträglich detektierbar ist.

Weitere Vorteile der Erfindung, Ausgestaltungen und Abwandlungen sind der nachfolgenden Beschreibung eines Ausführungsbeispiels entnehmbar. Dabei zeigen:
- Fig.1: Chipkartenlesegerät in räumlicher Darstellung
- Fig.2: Chipkartenlesegerät der Fig.1 in teilweise gebrochener Draufsicht von unten
- Fig.3: Schnitt A-A der Fig.2
- Fig.4: vergrößerter rechter Bereich der Fig.3
- Fig.5: vergrößerte Draufsicht von unten mit separat dargestelltem Klappelement
- Fig.6: Schnitt B-B der Fig.5
- Fig.7: Chipkartenlesegerät der Fig.2 mit ausgefahrenem Schubelement
- Fig.8: Schnitt C-C der Fig.7
- Fig.9: Chipkartenlesegerät in räumlicher Darstellung
- Fig.10: Chipkartenlesegerät in räumlicher Darstellung
- Fig.11: Teil des Chipkartenlesegeräts der Fig.10
- Fig.12: Chipkartenlesegerät in Draufsicht von unten
- Fig.13: Schnitt D-D der Fig.12
- Fig.14: Schnitt E-E der Fig.12
- Fig.15: Chipkartenlesegerät in Draufsicht von unten
- Fig.16: Schnitt F-F der Fig.15
- Fig.17: Schnitt G-G der Fig.15

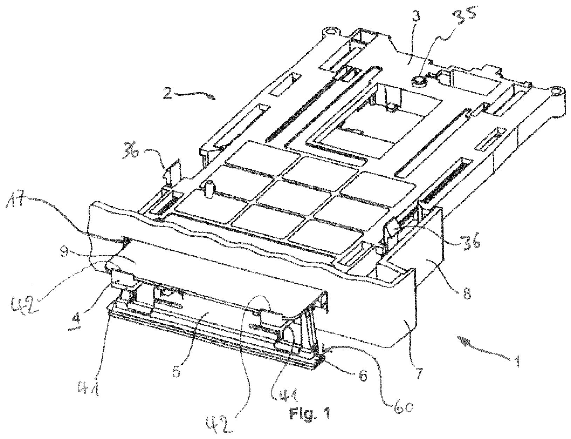

Fig.1 zeigt ein erfindungsgemäßes Chipkartenlesegerät 1 in Einbaulage in räumlicher Darstellung in teilweise gebrochener Ansicht von vorne oben. Man erkennt die Einfahrvorrichtung 2, die ein ortsfestes Trägerelement 3 aufweist, in dem ein - hier nur teilweise sichtbares - Schubelement 4 vor- und zurückbeweglich angeordnet ist. Am Schubelement 4 ist in dessen vorderem Bereich ein Klappelement 5 angeordnet, welches in seiner um 90° nach unten abgeklappten Position gezeigt ist. Am Klappelement 5 ist ein Dichtelement 6 formschlüssig angeordnet. Im eingefahrenen Zustand des Schubelements 4 ist das Klappelement 5 von seiner dargestellten Stellung aus um 90° nach vorne hochgeklappt und nach hinten verschoben, sodass das Dichtelement 6 an der vorderen Öffnung 17 einer Gehäusefront 7 anliegt. Der Bereich 60, in dem Dichtelement 6 und Gehäuse 8 voneinander beabstandet sind, befindet sich im unteren - in der abgeklappten Position im hinteren - Bereich des Klappelements 5. Die Gehäusefront 7 schließt das Gehäuse 8 nach vorne hin ab. Beide sind hier nur teilweise und gebrochen dargestellt. Ein Befestigungsloch 35 und Schnapphaken 36 dienen der Befestigung des Trägerelements 2 an einer hier nicht dargestellten Leiterplatte, die wiederum direkt oder indirekt am Gehäuse 8 befestigt ist. Auf dem Schubelement 4 befindet sich eine Chipkarte 9, deren vorderer Bereich sichtbar ist. Sie wird in diesem Bereich von zwei Balken 41 des Schubelements 4 nach unten gestützt und durch an deren vorderem Ende angeordnete Haltekanten 42 vor einem Herausrutschen nach vorne bewahrt.

Man erkennt, dass die Chipkarte 9 um ein mehrfaches breiter ist, als die Balken 41. Zwischen den Balken 41 befindet sich somit ein großer Freiraum innerhalb dessen ein Nutzer die Chipkarte 9 mit zwei Fingern greifen, nach oben über die Haltekante 42 anheben und nach vorne herausziehen kann. Es ist ebenfalls möglich, die Chipkarte 9 im Bereich zwischen den beiden Balken 41 durch Druck von unten über die Haltekante 42 hinaus anzuheben. Wenn, wie nach einer Variante vorgesehen, die Chipkarte 9 nach vorne federbelastet angeordnet ist, wird sie nach dem Anheben über die Haltekante 42 hinaus aufgrund der Federkraft nach vorne verschoben. Sie ragt dann noch weiter nach vorne über die Gehäusefront 7 hinaus und lässt sich damit noch leichter vom Nutzer greifen. Gemäß einer anderen Variante ist die Chipkarte 9 mit einer an dem Schubelement 4 angespritzten Balkenfeder 40 nach vorne federbelastet. Dies dient nur zum Spielausgleich der Chipkarte 9 innerhalb ihrer Lagerung im Schubelement 4. Ein Vorspringen bei der Entnahme ist nach dieser Variante nicht vorgesehen. Zum Einsetzen der Chipkarte 9 wird diese über die Haltekanten 42 hinweg eingeschoben, bis ihr vorderes Ende die Haltekanten 42 passiert hat. Ihr hinteres Ende ist dabei dasjenige, das zuerst eingeschoben wird. Aufgrund einer nach unten gerichteten Kraft entlang der senkrechten Kante der Haltekante 42, die durch die Verbiegung der Chipkarte 9 beim Einschieben hervorgerufenen wird, rastet die Chipkarte 9 nach dem Passieren der Haltekanten 42 hinter diesen ein.

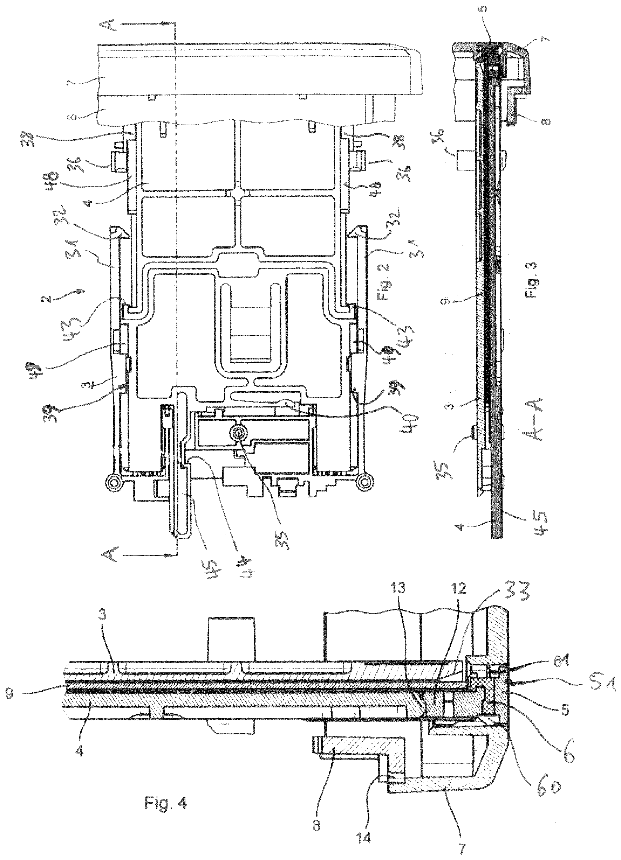

Fig.2 zeigt das Chipkartenlesegerät 1 der Fig.1 in teilweise gebrochener Draufsicht von unten. Gleiche Elemente sind hier wie zu allen folgenden Figuren mit gleichen Bezugszeichen versehen und werden im allgemeinen dann näher erläutert, wenn sich weitere oder andere Aspekte als zuvor beschrieben ergeben. Man erkennt die Einfahrvorrichtung 2, in der sich das Schubelement 4 in seiner zurückbewegten, eingefahrenen Position bezüglich des Trägerelements 3 befindet. Es ragt nicht nach vorne - in dieser Abbildung nach rechts - über die Gehäusefront 7 hinaus. Das Gehäuse 8 ist auch hier wieder nur gebrochen und teilweise dargestellt, um den Blick auf die Einfahrvorrichtung 2 zu ermöglichen. Man erkennt, dass das Trägerelement 3 Haltearme 31 aufweist, die an ihrem vorderen Ende mit nach innen vorspringenden Haltenasen 32 versehen sind. Diese wirken mit Anschlagelementen 43 des Schubelements 4 zusammen, wenn dieses von der dargestellten Position aus nach vorne bewegt wird - in der Abbildung nach rechts. Sobald die Anschlagelemente 43 an die Haltenasen 32 anschlagen hat das Schubelement 4 seine ausgefahrene Position erreicht und bewegt sich nicht weiter nach vorne. In der hier dargestellten eingefahrenen Position des Schubelements 4 wird dieses mittels einer Kante 44 gehalten die an einem hier nicht dargestellten Entriegelungshebel 34 anliegt. Die Kante 44 befindet sich an einer Zunge 45. Über die Federkraft einer hier nicht dargestellten Feder, die in der dargestellten Position des Schubelements 4 auf dieses eine nach rechts gerichtete Kraft ausgeübt, wird das Schubelement 4 nach dem Lösen von Kante 44 und einem hier nicht dargestelltem Entriegelungshebel 34 nach rechts bewegt, bis es seine maximal ausgefahrenen Position erreicht hat, in der die Anschlagelemente 43 an die Haltenasen 32 anschlagen. Der Entriegelungshebel 34, durch den die Kante 44 gehalten wird, ist vorzugsweise mittels eines elektrischen Aktuators bewegbar, beispielsweise mittels eines elektrisch betätigten Zugmagneten. Sobald der Entriegelungshebel 34 zurückgezogen ist, wird das Schubelement 4 aufgrund einer Federvorspannung nach rechts bewegt. Auch wenn der Zugmagnet nicht mehr aktiv ist kann der Entriegelungshebel 34 dann nicht mehr hinter die Kante 44 einrasten, sondern liegt seitlich an der Zunge 45 an, bis diese, nach Einschieben des Schubelements 4, wieder so weit nach in der Abbildung links verschoben ist, dass der Entriegelungshebel 34 aufgrund einer Federvorspannung sich wieder in der Abbildung nach oben bewegt und hinter der Kante 44 einrastet.

Das Schubelement 4 weist nach außen vorstehende Führungsnasen 48,49 auf, die mit entsprechenden Führungsnasen 38,39 des Trägerelements 3 zusammenwirken. Sie dienen zur horizontalen Führung des Schubelements 4.

Fig.3 zeigt den Schnitt A-A der Fig.2. Man erkennt das Trägerelement 3, unter dem sich die Chipkarte 9 befindet, die auf dem Schubelement 4 gelagert ist. Am linken Rand des Schubelements 4 erkennt man dessen Zunge 45. Am rechten Rand erkennt man das Gehäuse 8 mit Gehäusefront 7, über die das Klappelement 5 in der dargestellten eingezogenen Position nicht hinausreicht.

Fig.4 zeigt den vergrößerten rechten Bereich der Fig.3. Man erkennt, dass die Frontfläche 51 des Klappelements 5 nicht über die Gehäusefront 7 nach rechts hinausragt. Das Dichtelement 6 weist eine Dichtlippe 61 auf, die nach oben gegen die Gehäusefront 7 des Gehäuses 8 abdichtet. Nach unten liegt das Dichtelement 6 nicht an der Gehäusefront 7 an. Hier befindet sich der vom Gehäuse 8 beabstandete Bereich 60 des Dichtelements 6. Die Dichtlippe 61 erstreckt sich über die gesamte Breite des Klappelements und darüber hinaus auch noch auf der linken und rechten senkrechten Seite. Dies ist in einer der folgenden Abbildungen als Dichtlippe 62 gezeigt. Gemäß einer Variante der Erfindung endet die Dichtlippe 61 an den senkrechten Seiten in etwa auf der Höhe, in der das Dichtelement 6 im dargestellten Schnitt nach unten endet. Der beabstandete Bereich 60 nimmt somit die volle Breite des Klappelements 5 ein. Gemäß einer anderen Variante verläuft die Dichtlippe 61 auch nach unten in jeweils einem äußeren Bereich, sodass sie von den Außenkanten her kommend in diesem äußeren Bereich auch nach unten hin die Gehäusefront 7 abdichtet. Es schließt sich dann ein weniger breiter, beabstandeter Bereich 60 an, in dem, wie hier dargestellt, Dichtelement 6 und Gehäusefront 7 nach unten beabstandet sind. Gemäß einer Variante ist dieser beabstandete Bereich 60 relativ schmal und wird von einem weiteren abdichtenden Bereich in die andere Richtung begrenzt. Gemäß einer Variante können sich einer oder mehrere beabstandete Bereiche 60 mit abdichtenden Bereichen abwechseln. Allen diesen Varianten ist gemeinsam, dass im unteren Bereich Wasser oder Fremdstoffe, die sich im Bereich zwischen Dichtlippe 61 und Frontfläche 51 in deren oberen und seitlichen Bereichen befinden, nach unten abfließen und im beabstandeten Bereich 60 durch Öffnungen bis in den untersten Bereich der Gehäusefront 7 gelangen können. Dort befindet sich eine Ausnehmung 14, über die das dahin abgeleitete Wasser und Fremdstoffe aus dem Gehäuse 8 hinaus gelangen können. Diese Ausnehmung 14 ist vorzugsweise ein relativ breiter Spalt. Varianten sehen vor, dass mehrere schmale Spalte oder mehrere bohrungsförmige Ausnehmungen 14 vorgesehen sind. Allen diesen Varianten ist gemeinsam, dass sie eine Verbindung des Innenraums des Gehäuses 8 zur Umgebung ermöglichen. Auf diese Weise kann sowohl ein Luftaustausch stattfinden, der zur Wärmeabfuhr dient, als auch von oben eingedrungenes Spritzwasser oder Kondenswasser nach unten abfließen.

Das Klappelement 5 weist in seinem Inneren - in der Fig.linken
- Bereich ein Rastelement 12 auf. Dieses greift nach oben über einen Vorsprung 13 des Schubelements 4 hinaus. Auf diese Weise wird das Klappelement 5 in seiner dargestellten Position gehalten, auch wenn es nach dem Ausfahren des Schubelements 4 nach rechts nicht mehr durch mechanische Anlage an der Gehäusefront 7 in dieser Position gehalten wird. Man erkennt weiterhin, dass das Trägerelement 3 in seinem vorderen - in der Abbildung rechten
- Bereich eine Abschrägung 33 aufweist die der Chipkarte 9 in diesem Bereich eine gewisse Beweglichkeit nach oben ermöglicht, während sie ansonsten nur mit wenig Spiel nach unten von Trägerelement 3 und Schubelement 4 gehalten wird. Hauptfunktion der Abschrägung 33 ist es, das Einführen der Chipkarte 9 zu erleichtern.

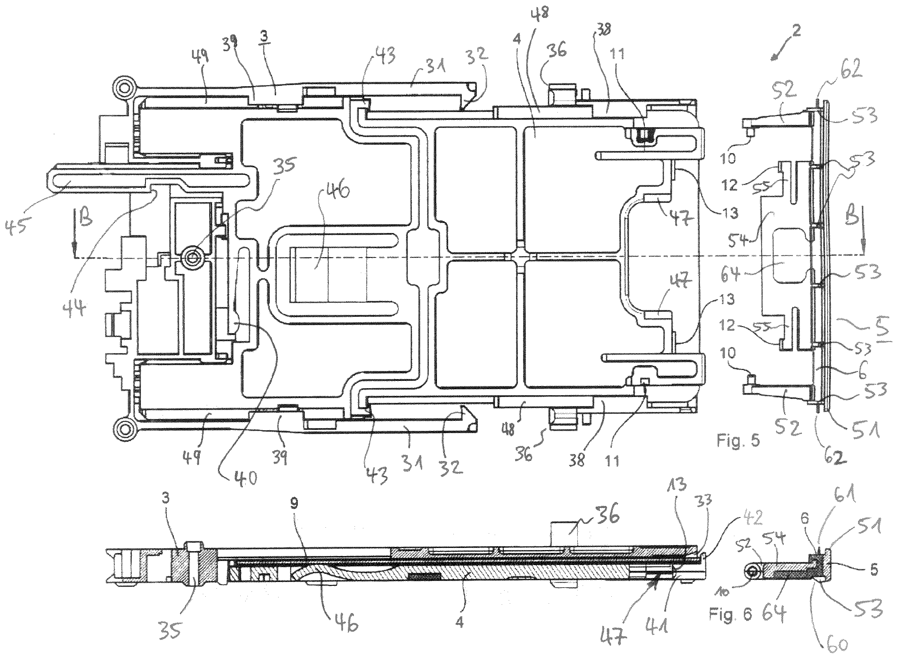

Fig.5 zeigt eine vergrößerte Draufsicht von unten, ähnlich Fig. 2, mit separat dargestelltem Klappelement 5 und ohne Darstellung von Gehäusefront 7 oder Gehäuse 8. Man erkennt, dass das Klappelement 5 von der Frontfläche 51 in der Abbildung nach links sich erstreckende Arme 52 aufweist, an deren Ende sich nach innen weisende Stifte 10 befinden. Diese greifen in Löcher 11 des Schubelements 4 ein und bilden die Drehachse, um die sich das Klappelement 5 abklappen lässt. Man erkennt weiterhin das Dichtelement 6, das flächig hinter die Frontfläche 51 verspritzt ist und nur von wenigen Stegen 53 unterbrochen wird. Die Stege 53 verbinden die Frontfläche 51 mit rückwärtigen Teilen des Klappelements 5, beispielsweise den Armen 52. Im mittleren Bereich weist das Klappelement 5 ein Zentralteil 54 auf, welches mit Zungen 55 versehen ist, an deren Ende die Rastelemente 12 angeordnet sind. Auch das Dichtelement 6 weist ein Zentralteil 64 auf, welches sich nach hinten erstreckt. Es dient sowohl zur Schwingungsdämpfung von Körperschwingungen in diesem Bereich als auch beim Abklappen des Klappelements 5 nach unten als dämpfender Anschlag gegen die Gehäusefront 7. Außerdem dient das Zentralteil 64 während der Herstellung als Angußfläche für das Dichtelement 6. Im in der Abbildung oberen und unteren Bereich erkennt man die seitlichen Dichtlippen 62, die in diesem Bereich gegen die Gehäusefront 7 abdichten. Am Schubelement 4 erkennt man weiterhin die Vorsprünge 13, die in montierter Position des Klappelements 5 mit dessen Rastelementen 12 zusammenwirken. Das Schubelement 4 weist Anschläge 47 auf, an die entsprechende Anschläge des Zentralteils 54 des Klappelements 5 anschlagen, wenn sich dieses in seiner oberen, nicht abgeklappten Position befindet. In der hier gewählten Darstellung sind die Anschläge des Zentralteils 54 nicht sichtbar, da sie sich oben, also unterhalb der hier gezeigten Bildebene befinden. In dieser Position greifen die Rastelemente 12 und die Vorsprünge 13 ineinander und halten das Klappelement 5 in der nicht-abgeklappten Position. Im linken Bereich des Schubelements 4 erkennt man eine Federzunge 46 die zum einen zur Fixierung der Chipkarte 9 dient. Zum anderen dient sie zum Anpressen der Chipkarte 9 an elektrische Kontakte, um einen sicheren elektrischen Kontakt zu gewährleisten.

Gemäß einer Variante ist statt einer Federzunge 46 ein Absenkmechanismus vorgesehen, der das Schubelement in seiner eingefahrenen Position in Richtung auf die elektrischen Kontakte hin absenkt. Dies ist zu folgenden Abbildungen beschrieben.

Gemäß einer Variante sind die Stifte 10 nicht rund ausgebildet, sondern weisen eine Mehrkantstruktur auf. Die Löcher 11 weisen dabei eine geriffelte Oberfläche auf, die mit der Mehrkantstruktur zusammenwirkt und dazu dient das Klappelement in seiner Position zu halten. Die Mehrkantstruktur ist dann eine Variante der Rastelemente 12. Sinnvollerweise ist die Mehrkantstruktur so ausgebildet, dass sie eine feste Halterung in der waagrechten und der um 90° nach unten abgeklappten Position bieten. Dazu reichen unter Umständen zwei Kanten aus.

Fig.6 zeigt den Schnitt B-B der Fig.5. Man erkennt das Klappelement 5 mit Frontfläche 51, das hinter der Frontfläche 51 formschlüssig angespritzte Dichtelement 6 mit Dichtlippe 61 und das Zentralteil 64. Das Zentralteil 64 erstreckt sich unter dem Zentralteil 54 des Klappelements 5. Nach vorne - in der Abbildung nach rechts - schließt sich der beabstandete Bereich an. Ein Teil eines Stegs 53 ist, soweit er nicht vom Dichtelement 6 verdeckt ist, zu erkennen. Im linken Bereich des Klappelements 5 sind noch ein Teil des Arms 52 und der Stift 10 erkennbar.

Im linken Teil der Fig.6 erkennt man das Schubelement 4 auf welchem die Chipkarte 9 aufliegt. Im in der Abbildung rechten Teil des Schubelements 4 liegt die Chipkarte 9 nicht mehr komplett auf sondern nur noch auf den Balken 41. Die Chipkarte 9 wird von deren Haltekante 42 am Herausfallen nach vorne - in der Abbildung nach rechts - gehindert. Die Haltekante 42 verriegelt die Chipkarte 9 auch dann, wenn im eingefahrenen Zustand des Schubelements 4 das Klappelement 5 demontiert sein sollte. Man erkennt, dass die Haltekante 42 sich weniger weit nach oben erstreckt als die Dichtlippe 61 des Dichtelements 6. Im linken Bereich des Schubelements 4 weist dieses eine nach oben gebogene Federzunge 46 auf, welche gegen die Chipkarte 9 eine nach oben gerichtete Kraft ausübt. Durch diese Kraft wird die Chipkarte 9 zum einen auch in diesem Bereich gegen Verschieben gesichert. Zum anderen dient dies zum sicheren Kontaktieren von in diesem Bereich im eingefahrenen Zustand befindlichen elektrischen Kontakten mit einem Kontaktfeld der Chipkarte 9. Das Trägerelement 3 weist ein Befestigungsloch 35 auf. Das Trägerelement 3 wird mittels einer Schraube durch das Befestigungsloch 35 und zweier Schnapphebel 36 an einer hier nicht dargestellten Leiterplatte des Gehäuses 8 befestigt. Im rechten Teil des Schubelements 4 erkennt man den Vorsprung 13 und den Anschlag 47, an den ein entsprechender Anschlag des Klappelements 5 anschlägt wenn dieses seine obere, montierte Position einnimmt.

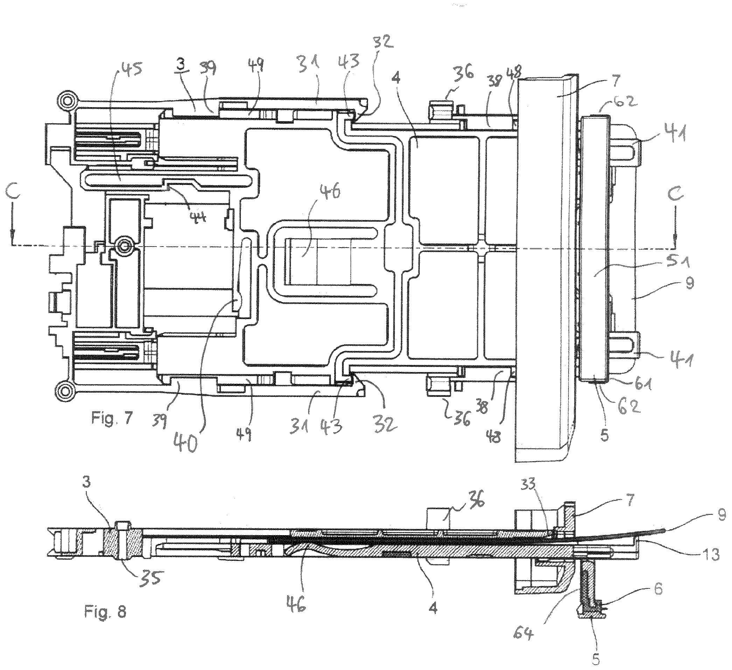

Fig.7 zeigt das Chipkartenlesegerät der Fig.2 mit ausgefahrenem Schubelement 4. Man erkennt die Gehäusefront 7 von unten, die Balken 41 des nach außen - in der Abbildung nach rechts - ausgefahrenen Schubelements 4, die darauf gelagerte Chipkarte 9 und die Frontfläche 51 des nach unten abgeklappten Klappelements 5. Die seitlichen Dichtlippen 62 und die nach oben abdichtende Dichtlippe 61 sind ebenfalls erkennbar. Im mittleren Teil der Abbildung erkennt man, dass die Anschlagelemente 43 an den Haltenasen 32 der Haltearme 31 anschlagen. Die Federzunge 46 übt einen nach oben gerichteten Druck auf die Chipkarte 9 aus.

Fig.8 zeigt den Schnitt C-C der Fig.7. Man erkennt das abgeklappte Klappelement 5 mit Dichtelement 6, dessen Zentralteil 64 gegen die Gehäusefront 7 dämpfend anschlägt wenn das Klappelement 5 sich beim Abklappen über die um 90° nach unten abgeklappte Position hinaus weiter nach links dreht. Die Chipkarte 9 ist bereits in ihrem vorderen Bereich - dem in der Abbildung rechten Bereich - vom Nutzer nach oben über den Vorsprung 13 hinaus angehoben und ein Stück weit nach vorne - in der Abbildung rechts - herausgezogen. Die Chipkarte 9 wird dabei nach oben gebogen, was durch die Abschrägung 33 des Trägerelements 3 erleichtert wird. Auch in dieser Position fällt die Chipkarte 9 nicht von alleine aus dem Chipkartenlesegerät 1 heraus. Zum einen weil sie durch die von der Verbiegung ausgeübten Haltekraft auf den Vorsprung 13 an einer Horizontalbewegung gehindert ist. Zum anderen auch weil sie von der Federzunge 46 des Schubelements 4 in ihrem hinteren Bereich beaufschlagt wird. Der Nutzer muss die Chipkarte 9 aktiv greifen und bewegen, um sie zu entnehmen. Beim Einschieben der Chipkarte 9 wird deren Bewegung abgebremst, sobald sie den Bereich der Federzunge 46 erreicht.

Die Erfindung betrifft also ein Chipkartenlesegerät 1 mit einem Schubelement 4, an dem ein Klappelement 5 angeordnet ist und in das eine Chipkarte 9 einlegbar ist. Das Dichtelement 6 leitet etwa von oben eingedrungenes Wasser oder Kondenswasser oder andere Fremdstoffe Richtung unterem Teil des Gehäuses 8. Mit dem erfindungsgemäßen Chipkartenlesegerät ist es einfach möglich, die Chipkarte 9 zu einzusetzen und wieder zu entnehmen. Die vorgeschlagene Lösung ist kostengünstig, ermöglicht die Abfuhr von Wärme aus dem Innenbereich sowie einen Abfluss von Wasser aus dem Innenbereich heraus. Die Einfahrvorrichtung 2 des Chipkartenlesegeräts 1 hat ein Trägerelement 3 in dem vor- und zurückgleitend ein bewegliches Schubelement 4 angeordnet ist. Dieses ist zwischen einer eingefahrenen und einer ausgefahrenen Position beweglich. Das Klappelement 5 hat zwei Stifte 10, die aus Kunststoff bestehen und die im vorderen Bereich des Schubelements 4 in Löchern 11 gelagert sind. Diese erfüllen die Funktion eines Gelenks. Wenn das Schubelement 4 sich in seiner ausgefahrenen Position befindet, wird das Klappelement 5, das zwei elastische Rastelemente 12 aufweist, die aus Kunststoff bestehen, in der horizontalen Position gehalten, da die Rastelemente 12 mit Vorsprüngen 13 des Schubelements 4 zusammenwirken. Um die Chipkarte 9 aus der Einfahrvorrichtung 2 zu entnehmen muss sich das Schubelement 4 in seiner ausgefahrenen Position befinden. Dann klappt der Nutzer das Klappelement 5, die Haltekraft der Rastelemente 12 und Vorsprünge 13 überwindend, nach unten ab. Anschließend muss der Nutzer das vordere Ende der Chipkarte 9 über die Vorsprünge 13 hinaus anheben, die die Chipkarte 9 im Schubelement 4 sichern. Das Klappelement 5 weist ein elastisches Dichtelement 6 auf, welches aus einem Gummimaterial besteht und im geschlossenen Zustand zusammen mit der Gehäusefront 7 etwa eingedrungenes Wasser Richtung Boden des Gehäuses 8 leitet. Durch die Ausnehmung 14 im Boden des Gehäuses 8 wird dieses Wasser dann aus dem Chipkartenlesegerät 1 hinausgeleitet.

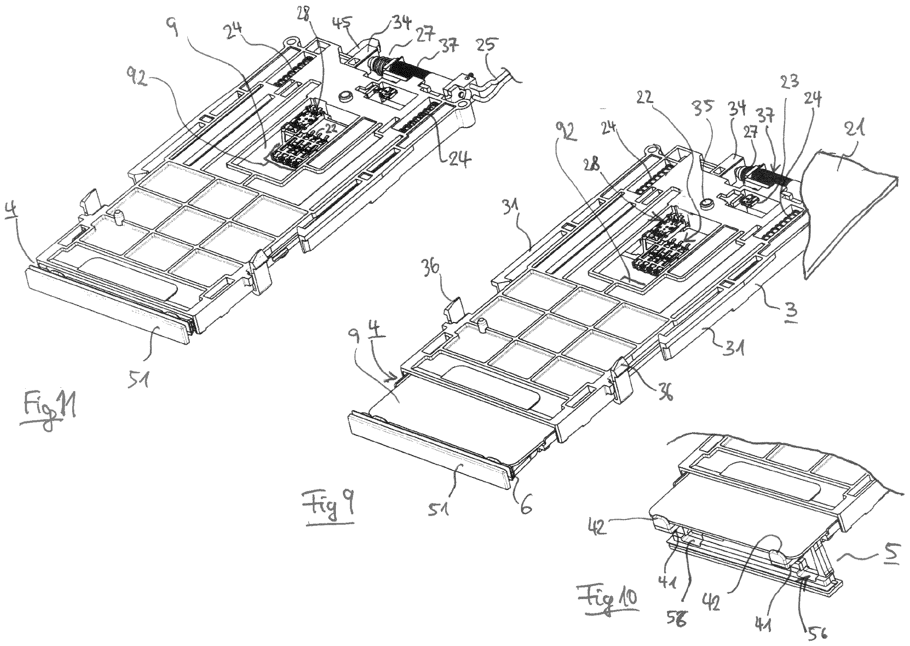

Fig.9 zeigt ein Chipkartenlesegerät 1 in räumlicher Darstellung, ähnlich zu Fig.1. Man erkennt die Chipkarte 9, die Frontfläche 51 mit dahinterliegendem Dichtelement 6, und das Trägerelement 3 mit Haltearmen 31. Das Trägerelement 3 ist mittels seiner Schnapphaken 36 und dem Befestigungsloch 35 an einer Leiterplatte 21 befestigt, die hier nur sehr teilweise dargestellt ist. An der Leiterplatte 21 sind weiterhin elektrische Kontakte 22 befestigt, die zum Kontaktieren eines Kontaktfelds 92 der Karte 9 dienen. Das Kontaktfeld 92 ist in dem hier dargestellten herausgeschobenen Zustand des Schubelements 4 nur teilweise sichtbar. An der Leiterplatte 21 ist weiterhin ein Schalter 23 befestigt, dessen Funktion zu nachfolgenden Abbildungen beschrieben wird. Ein Zugmagnet 37, der mit einem Entriegelungshebel 34 zusammenwirkt ist ebenfalls an der Leiterplatte 21 befestigt. Man erkennt weiterhin Druckfedern 24, die das Schubelement 4 gegen das Trägerelement 3 in seine dargestellte herausgefahrene Position schieben. Die Schnapphaken 36 weisen, anders als die zu den vorhergehenden Abbildungen gezeigten Schnapphaken 36, eine pyramidenartige Form auf, welche das Einsetzen in entsprechende Löcher der Leiterplatte 21 erleichtert.

Fig.10 zeigt das Chipkartenlesegerät der Fig.9 mit abgeklapptem Klappelement 5. Man erkennt die Balken 41 mit den Haltekanten 42, die gegenüber den vorhergehenden Abbildungen eine abgerundete Form aufweisen. Dabei sind sie sowohl seitlich abgerundet, als auch ist ihre obere Kante im Profil abgerundet. Dies vermeidet sowohl Beschädigungen der Chipkarte 9 beim Entnehmen und Einschieben, als auch mögliche Verletzungen des Nutzers. Außerdem wird die Wahrscheinlichkeit gemindert, dass sich Fremdpartikel an den Kanten der Balken 41 beziehungsweise der Haltekanten 42 festsetzen. Das Klappelement 5 weist Aussparungen 56 auf, die im hochgeklappten Zustand das vordere Ende der Balken 41 mit der Haltekante 42 aufnehmen.

Fig.11 zeigt das Chipkartenlesegerät der Fig.9 mit Schubelement 4 im eingefahrenen Zustand. Das Kontaktfeld 92 der Chipkarte 9 befindet sich unterhalb der elektrischen Kontakte 22. Die Chipkarte 9 ist in diesem Fall durch die Federzunge 46 so beaufschlagt, dass ein sicherer Kontakt zwischen den Kontakten 22 und dem Kontaktfeld 92 besteht. Alternativ zur Federzunge 46 ist vorgesehen, dass das Schubelement 4 in seiner äußerst eingefahrenen Position in vertikaler Richtung verschoben wird und dadurch die Chipkarte 9 mit Kontaktfeld 92 auf die Kontakte 22 zubewegt wird. Dies wird zu den folgenden Abbildungen näher beschrieben.

Man erkennt, dass die Druckfedern 24 in der eingefahrenen Position des Schubelements 4 stärker vorgespannt sind als in Fig.9 gezeigt. Man erkennt weiterhin, dass der Entriegelungshebel 34 weiter nach links verschoben ist und dabei hinter der hier nicht sichtbaren Kante 44 der Zunge 45 einrastet. Eine Druckfeder 27 des Zugmagneten 37 ist dabei entspannter als zu Fig. 9 gezeigt. Der Zugmagnet 37 wird über elektrische Zuleitungen 25 angesteuert.

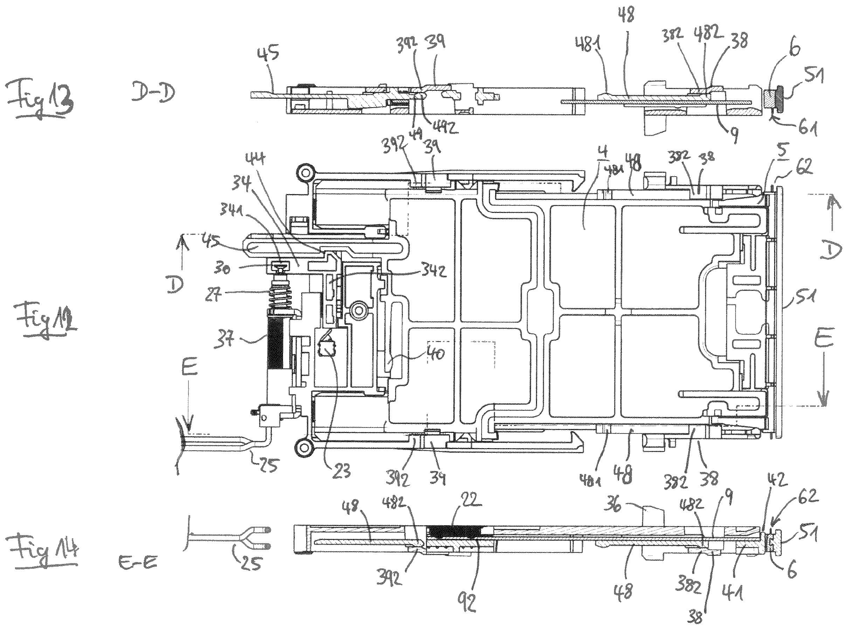

Fig.12 zeigt ein Chipkartenlesegerät in Draufsicht von unten. Die eingezeichneten Schnittlinien E-E und D-D verlaufen, wie eingezeichnet, nicht in einer durchgehenden Linie. Man erkennt das Schubelement 4 mit hochgeklapptem Klappelement 5 und Dichtlippe 62 des Dichtelements 6. Man erkennt weiterhin die Führungsnasen 48, die in ihrem Endbereich eine Erhöhung 481 aufweisen. Eine entsprechende Erhöhung 482 im vorderen Bereich der Führungsnasen 48 ist hier nicht sichtbar, da sie sich in der Abbildung unter der Führungsnase 38 befinden. Auch die Führungsnasen 38 weisen eine Erhöhung 382 in ihrem hinteren - in der Abbildung linken - Bereich auf. Dies wird zu den nachfolgenden Abbildungen näher erläutert. Auch die Führungsnasen 39 weisen eine Erhöhung 392 in ihrem hinteren Bereich auf.

Im linken Bereich der Fig.12 erkennt man, dass hier keine Federzunge 46 wie zu den vorhergehenden Abbildungen beschrieben vorgesehen ist. Stattdessen wird das Schubelement 4 in seiner hinteren Position angehoben. Man erkennt weiterhin den Zugmagneten 37 mit seinen elektrischen Zuleitungen 25, der mittels einer Druckfeder 27 vorgespannt ist und mit einer Frontscheibe 30 versehen ist, die in eine Ausnehmung 341 des Entriegelungshebels 34 eingreift. Der Entriegelungshebel 34 befindet sich aufgrund der Vorspannung durch die Druckfeder 27 in seiner vorgeschobenen Position, in der er hinter die Kante 44 der Zunge 45 greift und somit das Schubelement 4 gegen ein Verschieben nach außen verriegelt. Ein Arm 342 des Entriegelungshebels 34 ist in dieser Position vom Schalter 23 beabstandet. Dieser ist damit nicht betätigt.

Fig.13 zeigt den Schnitt D-D der Fig.12. Man erkennt im rechten Bereich die Frontfläche 51, das Dichtelement 6 mit oberer Dichtlippe 61 und den vorderen Teil der Chipkarte 9. Die Führungsnase 48 des Schubelements 4 weist an ihrem eingezogenen Ende die Erhöhung 481 auf und an ihrem vorderen Ende die Erhöhung 482. Diese liegt an der Erhöhung 382 der Führungsnase 38 des Trägerelements 3 an. Man erkennt, dass in dieser Position das Trägerelement 3 nach oben - in der Abbildung nach unten - verschoben ist. Im linken Bereich erkennt man die Führungsnase 39 mit Erhöhung 392. An dieser liegt die Erhöhung 492 der Führungsnase 49 an. Auch hier erkennt man, dass das Schubelement 4 aufgrund des Zusammenwirkens der Erhöhungen 392 und 492 nach oben - in der Abbildung nach unten - verschoben ist. Man erkennt weiterhin die Zunge 45.

Fig.14 zeigt den Schnitt E-E der Fig.12. Im rechten Bereich erkennt man die Frontfläche 51 und das Dichtelement 6 mit seiner oberen Dichtlippe 62. Der Balken 41 mit seiner Haltekante 42 hält die Chipkarte 9. Die Erhöhung 482 der Führungsnase 48 liegt an der Erhöhung 382 der Führungsnase 38 an. Das Schubelement 4 und damit die von diesem getragene Chipkarte 9 sind somit in dieser Position des Schubelements 4 nach oben verschoben. Im linken Bereich erkennt man die Erhöhung 482 der Führungsnase 48, die mit einer Erhöhung 392 zusammenwirkt. Die Chipkarte 9 ist somit auch auf dieser Seite nach oben verschoben, ihr Kontaktfeld 92, welches sich im mittleren Bereich befindet, ist somit gegen die elektrischen Kontakte 22 gedrückt wodurch eine sichere Kontaktierung gewährleistet ist. Ganz links sind die elektrischen Zuleitungen 25 für den Zugmagneten 37 gezeigt.

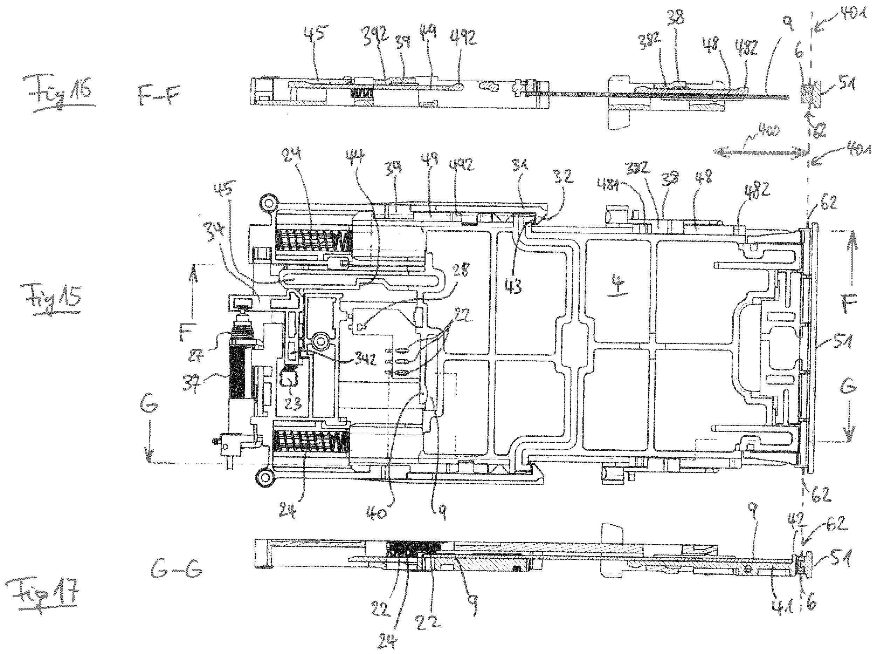

Fig.15 zeigt das Chipkartenlesegerät der Fig.12 im ausgefahrenen Zustand des Schubelements 4. Auch hier verlaufen die Schnittlinien F-F und G-G nicht in einer durchlaufenden Linie. Die Führungsnase 38 mit ihrer Erhöhung 382 ist im Vergleich zu Fig.12 nicht verschoben, während die Führungsnase 48 nach rechts verschoben ist. Ihre Erhöhung 481 bildet einen weiteren Anschlag an der Erhöhung 382, der im Normalfall nicht benötigt wird. Die Erhöhung 482 ist weit aus dem Bereich der Führungsnase 38 nach rechts verschoben, das Schubelement 4 befindet sich somit in seiner abgesenkten Position. Ähnliches gilt im Bereich der Führungsnase 39, die nun nichtmehr mit der Erhöhung 492 der Führungsnase 49 des Schubelements 4 in Kontakt steht. Das Schubelement 4 ist also auch in dieser Position abgesenkt. Man erkennt weiterhin, dass die Druckfedern 24 entspannt sind, nachdem sie das Schubelement 4 nach vorne - in der Abbildung nach rechts - verschoben haben. Dies erfolgt, sobald der Zugmagnet 37 gegen die Vorspannung der Druckfedern 27 den Entriegelungshebel 34 in der Abbildung nach unten zieht. Dabei rastet der Entriegelungshebel aus der Kante 44 aus und ermöglicht das Verschieben des Schubelements 4 nach rechts. Der Entriegelungshebel 34 gleitet dabei an der Außenseite der Zunge 45 entlang. Außerdem betätigt der Arm 342 den Schalter 23, der einer nicht dargestellten Steuerungseinheit den entriegelten Zustand mitteilt. Man erkennt weiterhin, dass die Balkenfeder 40 die Chipkarte 9 nach rechts gegen die Haltekante 42 (hier nicht dargestellt) drückt. Auch die elektrischen Kontakte 22 und ein Schalter 28 für die Chipkarte 9 sind in dieser Position sichtbar. Der Schalter 28 dient zur Überwachung ob eine Chipkarte 9 in das Schubelement 4 eingelegt ist.

Eingezeichnet ist hier auch die Vor-Zurück-Bewegungsrichtung 400 des Schubelements 4 sowie gestrichelt eine senkrecht auf dieser stehende Ebene 401. Man erkennt, dass in dieser Ebene 401 die Dichtlippen 62 liegen. Ebenso liegt die hier nicht sichtbare Dichtlippe 61 in der Ebene 401. Nach unten - in der Abbildung nach oben - anschließend liegt der Bereich 60, in dem das Dichtelement 6 keine Dichtlippe aufweist. Die Ebene 401 ist auch sich in die anschließenden Abbildungen Fig.16 und Fig.17 erstreckend eingezeichnet.

Fig.16 zeigt den Schnitt F-F der Fig.15. Die vordere abgerundete Ecke der Chipkarte 9 ist vom Dichtelement 6 beabstandet, dessen obere Dichtlippe 62 sichtbar ist. Man sieht auch hier, dass die Erhöhung 482 der Führungsnase 48 weit von der Erhöhung 382 der Führungsnase 38 des Trägerelements 3 entfernt ist. Entsprechendes gilt für die Erhöhung 492 der Führungsnase 49 und die Erhöhung 392 der Führungsnase 39.

Fig.17 zeigt den Schnitt G-G der Fig.15. Man erkennt die Chipkarte 9, die an der Haltekante 42 des Balkens 41 vorne anliegt. Das Dichtelement 6 mit oberer Dichtlippe 62 befindet sich zwischen Balken und Frontfläche 51. Weiter links erkennt man, dass die Chipkarte 9 von den elektrischen Kontakten 22 beabstandet ist. Die Druckfeder 24 ist im entspannten Zustand erkennbar.

## Patentansprüche

1. Einfahrvorrichtung (2) für ein Chipkartenlesegerät (1), aufweisend ein eine Chipkarte (9) aufnehmendes Schubelement (4), welches zwischen einem eingefahrenen und einem ausgefahrenen Zustand vor- und zurückbeweglich angeordnet ist, die Chipkarte (9) im eingefahrenen Zustand des Schubelements (4) nicht entnehmbar ist, und das Schubelement (4) ein Dichtelement (6) aufweist, **dadurch gekennzeichnet, dass** das Dichtelement (6) in einer senkrecht zur Vor-Zurück-Bewegungsrichtung (400) des Schubelements (4) stehenden Ebene (401) sowohl zumindest einen Bereich mit Dichtlippe (61, 62) als auch zumindest einen Bereich (60) ohne Dichtlippe aufweist.

2. Einfahrvorrichtung nach Anspruch 1, **dadurch gekennzeichnet, dass** das Dichtelement (6) an einem Klappelement (5) angeordnet ist.

3. Einfahrvorrichtung nach einem der vorhergehenden Ansprüche, **dadurch gekennzeichnet, dass** das Schubelement (4) im Bereich des Klappelements (5) aus zumindest einem Balken (41) gebildet ist, dessen Breite nur einen Bruchteil der Breite der Chipkarte (9) beträgt.

4. Einfahrvorrichtung nach einem der vorhergehenden Ansprüche, **dadurch gekennzeichnet, dass** das Klappelement (5) im ausgefahrenen Zustand des Schubelements (4) mittels Rastelementen (12) in seiner Position gehalten wird.

5. Einfahrvorrichtung nach einem der vorhergehenden Ansprüche, **dadurch gekennzeichnet, dass** das Schubelement (4) im Bereich des Dichtelements (6) eine Haltekante (42) aufweist, deren Ausdehnung in Richtung der Dicke der Chipkarte (9) geringer ist, als die entsprechende Ausdehnung des Dichtelements (6).

6. Einfahrvorrichtung nach einem der vorhergehenden Ansprüche, **dadurch gekennzeichnet, dass** das Dichtelement (6) hinter einer Frontfläche (51) des Klappelements (5) flächig hinterspritzt ist.

7. Gerät mit einer Einfahrvorrichtung (2) gemäß einem der vorhergehenden Ansprüche.

## Claims

1. Insertion device (2) for a chip card reader (1), having a slide element (4) which receives a chip card (9) and which is arranged so as to be movable back and forth between a moved-in state and a moved-out state, the chip card (9) not being removable in the moved-in state of the slide element (4), and the slide element (4) having a sealing element (6), **characterized in that**, in a plane (401) perpendicular to the back-and-forth movement direction (400) of the slide element (4), the sealing element (6) has both at least one region with a sealing lip (61, 62) and at least one region (60) without a sealing lip.

2. Insertion device according to Claim 1, **characterized in that** the sealing element (6) is arranged on a flap element (5).

3. Insertion device according to either of the preceding claims, **characterized in that**, in the region of the flap element (5), the slide element (4) is formed from at least one bar (41), whose width is only a fraction of the width of the chip card (9).

4. Insertion device according to one of the preceding claims, **characterized in that**, in the moved-out state of the slide element (4), the flap element (5) is held in its position by means of detent elements (12).

5. Insertion device according to one of the preceding claims, **characterized in that**, in the region of the sealing element (6), the slide element (4) has a holding edge (42) whose extent in the direction of the thickness of the chip card (9) is smaller than the corresponding extent of the sealing element (6) .

6. Insertion device according to one of the preceding claims, **characterized in that** the sealing element (6) is back-moulded areally behind a front surface (51) of the flap element (5).

7. Unit having an insertion device (2) according to one of the preceding claims.

## Revendications

1. Dispositif d'introduction (2) pour un lecteur de carte à puce (1), comprenant un élément de poussée (4) qui accueille une carte à puce (9), lequel est disposé avec mobilité vers l'avant et vers l'arrière entre un état rentré et un état sorti, la carte à puce (9) ne pouvant pas être retirée dans l'état rentré de l'élément de poussée (4) et l'élément de poussée (4) possédant un élément d'étanchéité (6), **caractérisé en ce que** l'élément d'étanchéité (6) possède, dans un plan (401) qui est perpendiculaire à la direction du mouvement avant-arrière (400) de l'élément de poussée (4), à la fois au moins une zone pourvue d'une lèvre d'étanchéité (61, 62) et au moins une zone (60) sans lèvre d'étanchéité.

2. Dispositif d'introduction selon la revendication 1, **caractérisé en ce que** l'élément d'étanchéité (6) est disposé sur un élément formant clapet (5).

3. Dispositif d'introduction selon l'une des revendications précédentes, **caractérisé en ce que** dans la zone de l'élément formant clapet (5), l'élément de poussée (4) est constitué par au moins une barre (41) dont la largeur n'est égale qu'à une fraction de la largeur de la carte à puce (9).

4. Dispositif d'introduction selon l'une des revendications précédentes, **caractérisé en ce que** dans l'état sorti de l'élément de poussée (4), l'élément formant clapet (5) est maintenu dans sa position au moyen d'éléments d'enclenchement (12).

5. Dispositif d'introduction selon l'une des revendications précédentes, **caractérisé en ce que** l'élément de poussée (4) possède, dans la zone de l'élément d'étanchéité (6), un bord d'arrêt (42) dont l'extension dans le sens de l'épaisseur de la carte à puce (9) est inférieure à l'extension correspondante de l'élément d'étanchéité (6).

6. Dispositif d'introduction selon l'une des revendications précédentes, **caractérisé en ce que** l'élément d'étanchéité (6) est obtenu par injection par l'arrière à plat derrière une face frontale (51) de l'élément formant clapet (5).

7. Appareil comprenant un dispositif d'introduction (2) selon l'une des revendications précédentes.
